# EUROPÄISCHE PATENTANMELDUNG

(11) **EP 0 990 601 A1**
(43) Veröffentlichungstag der Anmeldung: **05.04.2000**
(21) Anmeldenummer: 99118726.1
(22) Anmeldetag: 22.09.1999
(51) Int. Cl.: B65G 1/04

(54) **Verladeeinrichtung für Güter, insbesondere auf Paletten gestapelte Güter**

(30) Priorität: 02.10.1998 DE 29817584 U
(71) Anmelder: MSK-VERPACKUNGS-SYSTEME GESELLSCHAFT MIT BESCHRÄNKTER HAFTUNG, D-47533 Kleve (DE)
(72) Erfinder: Hannen, Reiner, 47546 Kalkar (DE)
(74) Vertreter: Stark, Walter, Dr.-Ing.

(57) **Zusammenfassung**

Die Erfindung betrifft eine Verladeeinrichtung (1) für Güter (3), insbesondere auf Paletten gestapelte Güter (3), bestehend aus im Abstand zueinander angeordneten und im Bereich der Verladeeinrichtung (1) endenden Förderern (2). Um eine Verladeeinrichtung (1) anzugeben, bei der die einzelnen Förderer (2) im Bereich der Verladezone nicht nur stirnseitig (6) sondern auch seitlich (7) zugänglich sind, sollen die Förderer (2) endseitig (6) im Bereich der Verladeeinrichtung (1) treppenartig abgestuft ausgebildet sein.

## Beschreibung

Die Erfindung betrifft eine Verladeeinrichtung für Güter, insbesondere auf Paletten gestapelte Güter, bestehend aus im Abstand zueinander angeordneten und im Bereich der Verladeeinrichtung endenden Förderern.

Derartige Verladeeinrichtungen werden in produzierenden Unternehmen wie beispielsweise Glashütten eingesetzt. Die fertig hergestellten Güter werden dabei in den Verladeeinrichtungen auf Förderern aufgestaut, damit sie für den Weitertransport beispielsweise mittels eines Lkws oder eines Zuges bereitgestellt sind.

Herkömmliche Verladeeinrichtungen, auch Palettenbahnhöfe genannt, sofern die Güter auf Paletten gestapelt sind, bestehen aus gleich langen, nebeneinander angeordneten Förderern, an deren einem Ende eine verfahrbare Aufgabevorrichtung vorgesehen ist. Mittels dieser Aufgabevorrichtung werden die insbesondere auf Paletten gestapelten Güter auf einen betreffenden Förderer gehoben und mittels dieses Förderers an das der Aufgabevorrichtung entgegen gesetzte Ende des Förderers transportiert. Hier können die Güter beispielsweise mittels eines Gabelstaplers von dem Förderer entnommen und zu dem betreffenden Zielort transportiert werden.

Es hat sich gezeigt, dass - sofern auf Paletten gestapelte Güter transportiert werden - die Paletten aufgrund der unterschiedlichen Abstände vorteilhafterweise quer zur Förderrichtung transportiert werden, da so eine genaue Positionierung, Zählung und Übergabe möglich ist. Daher liegt die Breitseite quer und die Schmalseite der Paletten längs in Förderrichtung. Da die Förderer gleich lang sind, können lediglich die beiden äußeren Förderer von der Stirnseite und von der Seite her angefahren werden, während die anderen Förderer nur von der Stirnseite mit einem Gabelstapler zugänglich sind.

Da die Paletten quer zur Förderrichtung transportiert werden, werden sie zwangsläufig am Endes eines Förderers von der Breitseite durch den Gabelstapler aufgenommen. Lediglich die Paletten auf den jeweils beiden äußeren Förderern sind auch von der Schmalseite zugänglich, da der Gabelstapler nicht nur von der Stirnseite, sondern auch von der Seite an diese beiden Förderer heranfahren kann.

Um einen Lastkraftwagen optimal mit auf Paletten aufgestapelten Gütern beladen zu können, müssen die Paletten quer auf die Ladefläche gesetzt werden. Da die Lastkraftwagen aber in der Regel von den Seiten her beladen werden, müssen die vorher von der Breitseite durch den Gabelstapler aufgenommen Paletten erst auf dem Boden abgesetzt und erneut von der Schmalseite aufgenommen werden. Dieses bedeutet nicht nur längere Verladezeiten und somit zwangsläufig einen erhöhten Kostenaufwand, sondern zusätzlich aufgrund des erneuten Absetzens ein erhöhtes Transportrisiko. Ferner wird ein größerer Verladeraum benötigt.

Aufgabe der Erfindung ist es, eine Verladeeinrichtung der eingangs beschriebenen Art anzugeben, die die vorgenannten Nachteile vermeidet und bei der die einzelnen Förderer im Bereich der Verladezone nicht nur stirnseitig sondern auch seitlich zugänglich sind.

Diese Aufgabe wird dadurch gelöst, dass die Förderer endseitig im Bereich der Verladeeinrichtung treppenartig abgestuft ausgebildet sind. Hierdurch sind die Förderer sowohl von der Stirnseite als auch zumindest von einer Seite her zugänglich.

So kann beispielsweise die Länge der Förderer in Förderrichtung von links nach rechts oder auch umgekehrt zunehmen, so dass sich in diesem Bereich eine treppenartige Abstufung ergibt.

Bei den herkömmlichen Verladeeinrichtungen werden die Güter sortenrein den einzelnen Förderern übergeben. Damit eine Abnahme am Ende der Förderer vom Gabelstabler sowohl stirnseitig als auch von der Seite erfolgen kann, muss das betreffende Gut mittels Querförderer aufwendig auf einen der äußeren Förderer transportiert werden oder durch aufwendige Drehvorrichtungen entsprechend bereit gestellt werden. Durch die erfindungsgemäße endseitige Abstufung kann der aufwendige Quertransport bzw. die Drehvorrichtung entfallen, und die Güter können direkt sowohl stirnseitig als auch von der Seite aufgenommen werden.

Bei einer Ausführung der erfindungsgemäßen Verladeeinrichtung weist jeder Förderer eine unterschiedliche Länge auf. Es ist aber auch durchaus möglich, dass zwei benachbarte Förderer dieselbe Länge haben, so dass ein Gabelstapler gleichzeitig zwei auf diesen zwei benachbarten und gleich langen Förderern abgestellte auf Paletten gestapelte Güter anheben kann. Dies setzt natürlich voraus, dass der Abstand zwischen diesen beiden Förderern recht gering ist.

Eine bevorzugte Ausführungsform zeichnet sich durch eine in Förderrichtung gesehen spiegelbildliche Anordnung der treppenartigen Abstufung aus. Somit ist die Verladeeinrichtung an dem der Aufgabevorrichtung entgegengesetzten Ende keilförmig ausgebildet, so dass der(die) am weitesten in eine Verladehalle hineinragende(hineinragenden) Förderer sogar von zwei Seiten her zugänglich sind.

Zweckmäßigerweise beträgt die Abstufung zwischen zwei benachbarten und unterschiedlich langen Förderern etwa 1 bis 2 Güterlängen. Durch diese Ausbildung kann ein Gabelstapler gleichzeitig zwei Paletten von einem Förderer, je eine Palette von zwei benachbarten Förderern oder sogar bis zu vier Paletten von zwei benachbarten Förderern nehmen. Es können aber auch zwei Gabelstapler gleichzeitig zwei benachbarte auf Paletten gestapelte Güter entnehmen.

Die Förderer können entweder als Rollenförderer oder als Kettenförderer ausgebildet sein. Insbesondere Paletten, die teilweise beschädigt sind oder teilweise schiefe oder abgebrochene Kufen, bei denen auch Nägel vorstehen können, aufweisen, lassen sich vorteilhafterweise auf Kettenförderern bewegen.

Damit die Paletten im Aufnahmebereich der Gabelstapler in jeder Richtung verschiebbar sind, kann das im Vergleich zu dem jeweiligen benachbarten kürzeren Förderer überstehende Teilstück des längeren Förderers als Rollenförderer ausgebildet sein.

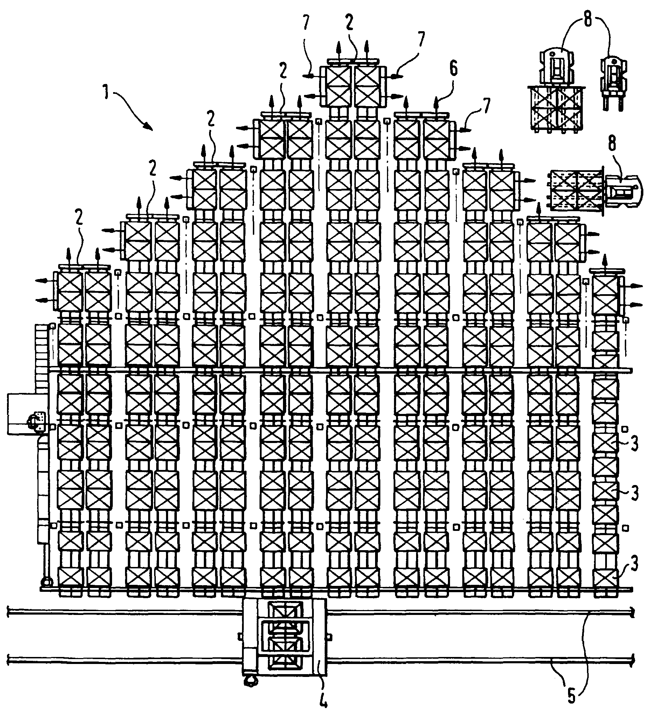

Im folgenden wird ein in der Zeichnung dargestelltes Ausführungsbeispiel der Erfindung erläutert. Die einzige Figur zeigt eine Verladeeinrichtung 1, die aus parallelen Förderern 2 besteht. Die Förderer 2 können beispielsweise Ketten- oder Rollenförderer sein, die je nach der Breite eines zu transportierenden Gutes 3 aus einer bestimmten Anzahl an nicht in der Figur dargestellten Bahnen bestehen, auf die die Güter 3 aufliegen.

An dem einen Ende der Förderer 2 befindet sich eine Aufgabevorrichtung 4, die auf Schienen 5 verfahrbar ist. Über die Aufgabevorrichtung 4 werden die auf Paletten gestapelten Güter 3 auf die betreffenden Förderer 2 aufgegeben.

Das der Aufgabevorrichtung 4 entgegengesetzte Ende der Förderer 2 ist, wie deutlich zu ersehen ist, treppenartig abgestuft, wobei die Verladeeinrichtung 1 in dem dargestellten Ausführungsbeispiel eine spiegelbildliche Anordnung aufweist und somit keilförmig ausgebildet ist. Es ist aber auch durchaus möglich, dass - beispielsweise wenn weniger Verladeraum vorhanden ist - die Länge der Förderer 2 in Förderrichtung von einer Seite der Verladeeinrichtung 1 kontinuierlich zur anderen Seite abnimmt, so dass der am weitesten vorstehende Förderer 2 außen liegt.

Durch die treppenartig abgestufte Anordnung können die Förderer 2 an dem der Aufgabevorrichtung 3 entgegengesetzten Ende sowohl stirnseitig - wie die Pfeile 6 andeuten - als auch seitlich - wie die Pfeile 7 andeuten - mit Gabelstaplern 8 angefahren werden. Bei der spiegelbildlich abgestuften Ausführungsform sind die beiden mittigen Förderer 2, die am weitesten in die Verladezone reichen, sogar von beiden Seiten in Richtung der Pfeile 6 befahrbar.

In dem dargestellten Ausführungsbeispiel sind bis auf den rechten Förderer 2 jeweils zwei Förderer 2 gleicher Länge im geringen Abstand zueinander angeordnet. Die Abstufung zwischen zwei Förderern 2 gleicher Länge zu den benachbarten zwei Förderern 2 gleicher Länge beträgt dabei zwei Längen an Gütern 3. Hierdurch ist es möglich, dass ein Gabelstapler 8 gleichzeitig bis zu vier Güter 3 von zwei benachbarten Förderern 2 aufnehmen kann. Es können aber auch gleichzeitig zwei Gabelstapler 8 von der Seite Güter 3 von einem Förderer 2 oder aber direkt von zwei benachbarten Förderern 2 aufnehmen.

Sofern mittels der Förderer 2 Paletten bewegt werden sollen, sind die Förderer 2 als Kettenförderer ausgebildet. Damit die Paletten in dem Aufnahmebereich der Paletten durch den Gabelstapler 8 beliebig ver- und zusammenschiebbar sind, sind die im Vergleich zu dem jeweiligen benachbarten kürzeren Förderer 2 überstehenden Teilstücke des längeren Förderers 2 als Rollenförderer ausgebildet.

## Patentansprüche

1. Verladeeinrichtung (1) für Güter (3), insbesondere auf Paletten gestapelte Güter (3), bestehend aus im Abstand zueinander angeordneten und im Bereich der Verladeeinrichtung (1) endenden Förderern (2), dadurch gekennzeichnet, dass die Förderer (2) endseitig im Bereich der Verladeeinrichtung (1) treppenartig abgestuft ausgebildet sind.

2. Verladeeinrichtung (1) nach Anspruch 1, gekennzeichnet durch eine in Förderrichtung gesehen spiegelbildliche Anordnung der treppenartigen Abstufung.

3. Verladeeinrichtung (1) nach Anspruch 1 oder 2, dadurch gekennzeichnet, dass die Abstufung zwischen zwei benachbarten und unterschiedlich langen Förderern (2) etwa 1 bis 2 Güterlängen beträgt.

4. Verladeeinrichtung (1) nach einem der Ansprüche 1 bis 3, dadurch gekennzeichnet, dass die Förderer (2) als Rollenförderer ausgebildet sind.

5. Verladeeinrichtung (1) nach einem der Ansprüche 1 bis 4, dadurch gekennzeichnet, dass die Förderer (2) als Kettenförderer ausgebildet sind.

6. Verladeeinrichtung (1) nach Anspruch 5, dadurch gekennzeichnet, dass das im Vergleich zu dem jeweiligen benachbarten kürzeren Förderer (2) überstehende Teilstück des längeren Förderers (2) als Rollenförderer ausgebildet ist.
